# EUROPEAN PATENT SPECIFICATION

(11) **EP 3 688 694 B1**
(45) Date of publication and mention of the grant of the patent: **18.11.2026**
(21) Application number: 18789280.7
(22) Date of filing: 13.09.2018
(51) Int. Cl.: G06Q 10/06, G06Q 50/40, B60W 60/00

(54) **SYSTEMS AND METHODS FOR DETERMINING WHETHER AN AUTONOMOUS VEHICLE CAN PROVIDE A REQUESTED SERVICE FOR A RIDER**
SYSTEME UND VERFAHREN ZUR FESTSTELLUNG, OB EIN AUTONOMES FAHRZEUG EINEN ANGEFORDERTEN DIENST FÜR EINEN FAHRER BEREITSTELLEN KANN
SYSTÈMES ET PROCÉDÉS DE DÉTERMINATION DU FAIT DE SAVOIR SI UN VÉHICULE AUTONOME PEUT FOURNIR UN SERVICE DEMANDÉ DESTINÉ À UN PASSAGER

(30) Priority: 28.09.2017 US 201762564326 P; 25.10.2017 US 201715792964
(43) Date of publication of application: 05.08.2020
(73) Proprietor: Uber Technologies, Inc., San Francisco, California 94103 (US)
(72) Inventor: NIX, Molly Castle, San Francisco, California 94103 (US); CHIN, Sean, San Francisco, California 94103 (US); HANSON, Eric J., San Francisco, California 94103 (US); ZHAO, Dennis, San Francisco, California 94103 (US); BARTEL, Emily Cairns Duff, San Francisco, California 94103 (US)
(74) Representative: Marks & Clerk LLP
(86) International application number: PCT/US2018/050879
(87) International publication number: WO 2019/067225

(56) References cited:
- WO-A1-2017/079222
- US-A1- 2015 339 928
- US-B1- 9 715 233

## Description

The present application is based on and claims the benefit of United States Application 15/792,964 having a filing date of October 25, 2017, which is based on and claims the benefit of United States Provisional Application 62/564,326 having a filing date of September 28, 2017.

### FIELD

The present disclosure relates generally to operation of an autonomous vehicle for provisioning of a service. More particularly, the present disclosure relates to systems and methods that provide for determining whether an autonomous vehicle can be assigned to perform a service requested by a rider.

### BACKGROUND

An autonomous vehicle is a vehicle that is capable of sensing its environment and navigating with little to no human input. In particular, an autonomous vehicle can observe its surrounding environment using a variety of sensors and can attempt to comprehend the environment by performing various processing techniques on data collected by the sensors. This can allow an autonomous vehicle to navigate without human intervention and, in some cases, even omit the use of a human driver altogether. However, in some situations, it may not be optimal for an autonomous vehicle to provide a requested service for a rider. For instance, factors associated with the rider, such as a status of their computing device, may preclude assigning an autonomous vehicle to provide services to the rider.
US2015/0339928 proposes technology for operating a fleet of autonomous vehicles. US9715233 proposes a system and method for enabling a user of a mobile communication device to select or input a second taxi-start location parameter for a substantially autonomous vehicle to navigate to within a pre-determined period of time and wherein the successful registering and processing of the second taxi-start location parameter overrides a previously user-inputted first taxi-start location parameter.

### SUMMARY

Aspects and advantages of embodiments of the present disclosure will be set forth in part in the following description, or can be learned from the description, or can be learned through practice of the embodiments.

According to a first aspect of the present invention, there is provided a computer-implemented method as set out in claim 1.
The method may further include wherein the one or more indications from a user device associated with the rider comprises one or more indications regarding a wireless radio capability of the user device. The method may further include wherein obtaining data associated with the rider making the vehicle service request comprises obtaining a rider profile associated with the rider making the vehicle service request. The method may further include wherein the rider profile comprises information regarding a type of vehicle that should be assigned to provide the requested service.

According to a second aspect of the present invention, there is provided a computing system as set out in claim 5.

According to a third aspect of the present invention, there is provided one or more tangible, non-transitory computer-readable media as set out in claim 6.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
FIG. 1 depicts a block diagram of an example system for controlling the navigation of a vehicle according to example embodiments of the present disclosure;
FIG. 2 depicts a flowchart diagram of an example method for determining whether to assign an autonomous vehicle to a service request according to example embodiments of the present disclosure;
FIG. 3 depicts a flowchart diagram of an example method for determining whether to assign an autonomous vehicle to a service request according to example embodiments of the present disclosure;
FIG. 4 depicts an example of a rider/user profile data structure according to example embodiments of the present disclosure;
FIG. 5 depicts a block diagram of an example computing system according to example embodiments of the present disclosure; and
FIG. 6 depicts a block diagram of an example system according to example embodiments of the present disclosure.

### DETAILED DESCRIPTION

Reference now will be made in detail to embodiments, one or more example(s) of which are illustrated in the drawings. Each example is provided by way of explanation of the embodiments, not limitation of the present disclosure. In fact, it will be apparent to those skilled in the art that various modifications and variations can be made to the embodiments without departing from the scope of the present disclosure. For instance, features illustrated or described as part of one embodiment can be used with another embodiment to yield a still further embodiment. Thus, it is intended that aspects of the present disclosure cover such modifications and variations.

Example aspects of the present disclosure are directed to determining whether a rider's trip request can be assigned to an autonomous vehicle. In particular, the systems and methods of the present disclosure can obtain data associated with a rider for use in matching the rider's request with either an autonomous vehicle or a human operated vehicle. The systems and methods of the present disclosure can provide for determining the appropriate vehicle to be assigned to provide the requested service.

In particular, according to an aspect of the present disclosure, a user (e.g., a rider) may request a vehicle service from an entity, such as a service provider, that maintains a fleet of vehicles including both autonomous vehicles and driver operated vehicles. The service provider may obtain data associated with the rider which can be used in making a determination of whether an autonomous vehicle or a driver operated vehicle can be assigned to perform the requested vehicle service. For example, an operations computing system associated with the service provider may obtain data associated with the rider from one or more sources that may be relevant to determining the type of vehicle that could be assigned to perform the requested service. In an example, the operations computing system may obtain one or more indications from a user device associated with the rider that may be relevant to an autonomous vehicle assignment determination. In another example, the operations computing system may also access a user or rider profile associated with the rider that is maintained by the service provider which may include one or more profile attributes or settings that may be relevant to an autonomous vehicle assignment determination.

More particularly, an entity (e.g., service provider, owner, manager) can use one or more vehicles (e.g., ground-based vehicles) to provide a vehicle service such as a transportation service (e.g., rideshare service), a courier service, a delivery service, etc. The vehicle(s) can be autonomous vehicles that include various systems and devices configured to control the operation of the vehicle. For example, an autonomous vehicle can include an onboard vehicle computing system for operating the vehicle (e.g., located on or within the autonomous vehicle). The vehicle computing system can receive sensor data from sensor(s) onboard the vehicle (e.g., cameras, LIDAR, RADAR), attempt to comprehend the vehicle's surrounding environment by performing various processing techniques on the sensor data, and generate an appropriate motion plan through the vehicle's surrounding environment. Moreover, the autonomous vehicle can be configured to communicate with one or more computing devices that are remote from the vehicle. For example, the autonomous vehicle can communicate with an operations computing system that can be associated with the entity. The operations computing system can help the entity monitor, communicate with, manage, etc. the fleet of vehicles. Further, the operations computing system can obtain rider associated data from one or more sources in response to a rider's service request and consider the rider associated data in determining whether to assign an autonomous vehicle to perform the requested service for the rider.

According to example aspects of the present disclosure, an operations computing system associated with a service provider can receive a request for a vehicle service from a user (e.g., a rider), for example, through a vehicle service application associated with the service provider which is operating on the rider's user device. The operations computing system can obtain data associated with the rider that can then be considered by the operations computing system in determining whether an autonomous vehicle can be assigned to perform the requested service for the rider. For example, the data associated with the rider obtained by the operations computing system may inform a determination of whether the rider would be able to complete the trip if an autonomous vehicle is assigned to perform the requested service.

More particularly, in some implementations, the operations computing system can obtain data from the rider's user device that may be relevant to determining whether an autonomous vehicle can be assigned to perform the requested service. For example, the operations computing system can obtain indications from the rider's user device regarding parameters or settings associated with the user device. In some implementations, the operations computing system may receive indications including one or more of location, battery level, wireless radio availability (e.g., Bluetooth availability, Bluetooth Low Energy (BLE) availability, Near Field Communication (NFC) availability, etc.), wireless radio status (e.g., Bluetooth status, BLE status, NFC status, etc.), and/or the like to be considered in determining a vehicle to be assigned to provide the requested service for the rider. In some implementations, additional data associated with the rider may also be obtained from the user device for use in determining a vehicle assignment, such as a rider's calendar (e.g., upcoming events), a rider's social network activity, and/or the like.

More particularly, in some implementations, the service provider application operating on the rider's user device may provide functionality, such as user authentication, vehicle unlocking commands, and/or the like, which requires that the rider's user device be active to initiate the vehicle service at the autonomous vehicle. Thus, the operations computing system may obtain an indication of the remaining battery level from the user device to determine that the user device is likely to be operating when an autonomous vehicle is scheduled to arrive to initiate the requested service (e.g., there is sufficient remaining battery life that the user device will not power down before the autonomous vehicle arrives to pick up the rider and begin the service). For example, the operations computing system may compare the indication of remaining battery level to a threshold to determine if the battery level is above a threshold as part of determining whether an autonomous vehicle can be assigned to perform the requested service.

**In** some implementations, the required battery level threshold may be determined based on factors associated with the requested service and the availability of an autonomous vehicle. For example, a battery level threshold may be selected such that the user device will be active for at least a certain period of time after the autonomous vehicle is scheduled to arrive to begin the requested service, such that the user device is certain to be active at least for the rider pick up and initiation of the requested service. **In** such situations, the battery level threshold may be determined based on consideration of the time to entry for the rider (e.g., the time frame for the autonomous vehicle to arrive and for the rider to enter the vehicle and begin the service).

**In** another example, a battery level threshold may be selected such that the user device will be active during the entire life cycle of the requested service (e.g., the user's device is certain to be active for the duration of the service from pick up through drop off), for example, to ensure that the rider's user device is active throughout the service to allow for interactions between the rider and the autonomous vehicle. **In** such situations, the battery level threshold may be determined based on consideration of the time to entry for the autonomous vehicle as well as the expected duration of the vehicle service (e.g., considering factors such as route, traffic, and/or the like).

**In** some implementations, the service provider application operating on the rider's user device may use wireless radio (e.g., Bluetooth, etc.) capabilities to provide interaction between the service provider application and the autonomous vehicle, for example, to improve a user experience. In such implementations, the operations computing system may obtain indications of whether the rider's user device has wireless radio (e.g., Bluetooth, etc.) capabilities and whether the user device wireless radio (e.g., Bluetooth, etc.) service is active and take these factors into consideration in determining whether to assign an autonomous vehicle for the requested service
In some implementations, the operations computing system may obtain rider calendar information for use in determining whether to assign an autonomous vehicle to provide the requested service. For example, if the rider has an upcoming appointment, the operations computing system may take this into consideration to allow for selecting the vehicle that may provide the fastest service for the rider.

In some implementations, the operations computing system may obtain rider social network information for use in determining whether to assign an autonomous vehicle to provide the requested service. For example, if the requested service is for the rider to participate in an event with friends, the operations computing system may take this into consideration to allow for selecting the vehicle that may allow for the rider's friends to join the trip.

According to another aspect of the present disclosure, in some implementations, the operations computing system may additionally or alternatively access a rider or user profile associated with the rider that is maintained by the service provider which may include one or more profile attributes or settings that may be relevant to determining whether an autonomous vehicle can be assigned to provide a requested service for the rider. For example, a rider profile may include data regarding the rider's comfort level in using autonomous vehicles (e.g., first time or novice rider, experienced rider, does not want autonomous vehicle service, etc.), the type of vehicle a rider generally requests (e.g., wheelchair accessible, extra storage space, etc.), use of carpool services. By taking rider profile data into consideration as part of the vehicle determinations, the operations computing system can ensure that an appropriate vehicle is assigned to provide the requested service.

For example, in some implementations, the operations computing system may determine that a rider generally desires a vehicle that has wheelchair accessibility based on stored rider profile settings. The operations computing system can then take wheelchair accessibility into consideration when determining a vehicle to be assigned to provide the requested service.

In some implementations, the rider profile attributes or settings can provide default data for use in a vehicle assignment determination. However, the rider profile settings can also be overridden based on a specific service request. For example, the rider profile data can indicate that the rider is generally willing to move to a designated pickup location to access the vehicle service, but the rider can also indicate in a request that this selection should be modified for the current request (e.g., the rider has packages and does not wish to carry them to a designated pickup location), thereby affecting the determination of a vehicle to be assigned for the requested service.

In some implementations, the operations computing system may determine that the rider is a first-time rider in an autonomous vehicle (or has little experience with autonomous vehicles) and can take this into consideration when determining a vehicle to assign to provide the requested service. Thus, the operations computing system may consider this factor in the determination and, for example, assign a more rider-friendly vehicle to provide the requested service (e.g., an autonomous vehicle with a tablet or screen to provide more interaction with the rider).

In some implementations, the operations computing system may determine that the rider is well experienced with autonomous vehicles and can take this into consideration when determining a vehicle to assign to provide the requested service. Thus, the operations computing system may consider this factor in the determination and, for example, assign a new or different vehicle to provide the requested service for the rider (e.g., to allow the rider to experience different vehicles within a fleet).

As another example, the rider profile may indicate that the rider is not comfortable with autonomous vehicles, and the operations computing system can take this into consideration and determine that an autonomous vehicle should not be assigned, if possible.

The systems and methods described herein may provide a number of technical effects and benefits. For instance, considering rider associated data when making determination whether to assign an autonomous vehicle to provide a vehicle service in accordance with the present disclosure can provide for enabling appropriate vehicle services for a rider, thereby improving the autonomous vehicle-rider experience. Taking rider associated data into consideration in the vehicle determination can also provide the benefit of a more personalized and improved experience for a user and provides a more frictionless autonomous vehicle interaction for users. Additionally, the consideration of rider profile attributes or settings may provide improvements for the rider-vehicle matching experience and may allow for more background determinations to tailor the vehicle selection based on a specific trip request.

The systems and methods described herein may also provide resulting improvements to computing technology tasked with operations of an autonomous vehicle, such as routing and user experience. For example, the use of rider associated data in vehicle assignment determinations, an autonomous vehicle (e.g., a vehicle computing system) may be able to optimize processing and efficiency by ensuring that rider-vehicle interactions can be executed quickly and efficiently.

With reference to the figures, example embodiments of the present disclosure will be discussed in further detail.

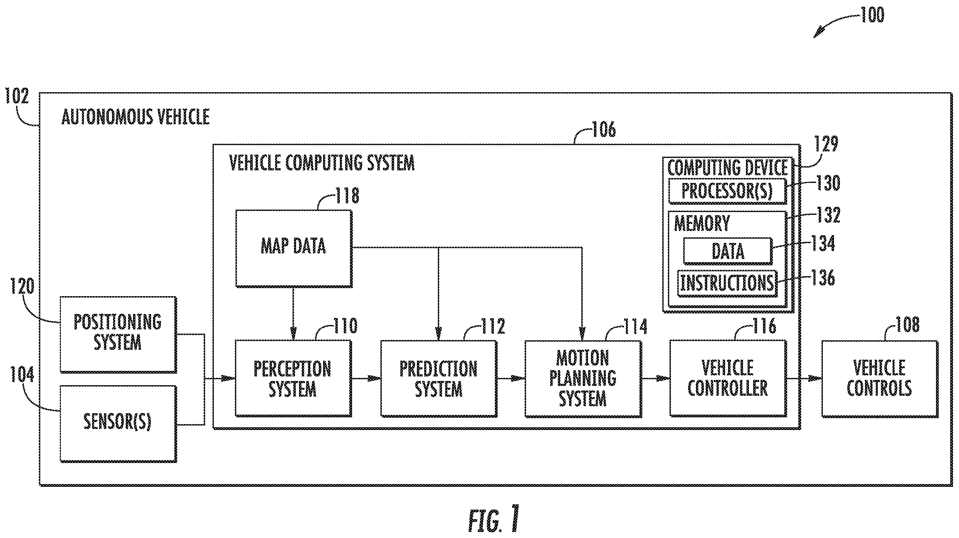

FIG. 1 depicts a block diagram of an example system 100 for controlling the navigation of an autonomous vehicle 102 according to example embodiments of the present disclosure. The autonomous vehicle 102 is capable of sensing its environment and navigating with little to no human input. The autonomous vehicle 102 can be a ground-based autonomous vehicle (e.g., car, truck, bus, etc.), an air-based autonomous vehicle (e.g., airplane, drone, helicopter, or other aircraft), or other types of vehicles (e.g., watercraft). The autonomous vehicle 102 can be configured to operate in one or more modes, for example, a fully autonomous operational mode, semi-autonomous operational mode, and/or a non-autonomous operational mode. A fully autonomous (e.g., self-driving) operational mode can be one in which the autonomous vehicle can provide driving and navigational operation with minimal and/or no interaction from a human driver present in the vehicle. A semi-autonomous (e.g., driver-assisted) operational mode can be one in which the autonomous vehicle operates with some interaction from a human driver present in the vehicle.

The autonomous vehicle 102 can include one or more sensors 104, a vehicle computing system 106, and one or more vehicle controls 108. The vehicle computing system 106 can assist in controlling the autonomous vehicle 102. In particular, the vehicle computing system 106 can receive sensor data from the one or more sensors 104, attempt to comprehend the surrounding environment by performing various processing techniques on data collected by the sensors 104, and generate an appropriate motion path through such surrounding environment. The vehicle computing system 106 can control the one or more vehicle controls 108 to operate the autonomous vehicle 102 according to the motion path.

The vehicle computing system 106 can include one or more processors 130 and at least one memory 132. The one or more processors 130 can be any suitable processing device (e.g., a processor core, a microprocessor, an ASIC, a FPGA, a controller, a microcontroller, etc.) and can be one processor or a plurality of processors that are operatively connected. The memory 132 can include one or more non-transitory computer-readable storage mediums, such as RAM, ROM, EEPROM, EPROM, flash memory devices, magnetic disks, etc., and combinations thereof. The memory 132 can store data 134 and instructions 136 which are executed by the processor 130 to cause vehicle computing system 106 to perform operations. In some implementations, the one or more processors 130 and at least one memory 132 may be comprised in one or more computing devices, such as computing device(s) 129, within the vehicle computing system 106.

In some implementations, vehicle computing system 106 can further be connected to, or include, a positioning system 120. Positioning system 120 can determine a current geographic location of the autonomous vehicle 102. The positioning system 120 can be any device or circuitry for analyzing the position of the autonomous vehicle 102. For example, the positioning system 120 can determine actual or relative position by using a satellite navigation positioning system (e.g. a GPS system, a Galileo positioning system, the GLObal Navigation satellite system (GLONASS), the BeiDou Satellite Navigation and Positioning system), an inertial navigation system, a dead reckoning system, based on IP address, by using triangulation and/or proximity to cellular towers or WiFi hotspots, and/or other suitable techniques for determining position. The position of the autonomous vehicle 102 can be used by various systems of the vehicle computing system 106.

As illustrated in FIG. 1, in some embodiments, the vehicle computing system 106 can include a perception system 110, a prediction system 112, and a motion planning system 114 that cooperate to perceive the surrounding environment of the autonomous vehicle 102 and determine a motion plan for controlling the motion of the autonomous vehicle 102 accordingly.

In particular, in some implementations, the perception system 110 can receive sensor data from the one or more sensors 104 that are coupled to or otherwise included within the autonomous vehicle 102. As examples, the one or more sensors 104 can include a Light Detection and Ranging (LIDAR) system, a Radio Detection and Ranging (RADAR) system, one or more cameras (e.g., visible spectrum cameras, infrared cameras, etc.), and/or other sensors. The sensor data can include information that describes the location of objects within the surrounding environment of the autonomous vehicle 102.

As one example, for LIDAR system, the sensor data can include the location (e.g., in three-dimensional space relative to the LIDAR system) of a number of points that correspond to objects that have reflected a ranging laser. For example, LIDAR system can measure distances by measuring the Time of Flight (TOF) that it takes a short laser pulse to travel from the sensor to an object and back, calculating the distance from the known speed of light.

As another example, for RADAR system, the sensor data can include the location (e.g., in three-dimensional space relative to RADAR system) of a number of points that correspond to objects that have reflected a ranging radio wave. For example, radio waves (pulsed or continuous) transmitted by the RADAR system can reflect off an object and return to a receiver of the RADAR system, giving information about the object's location and speed. Thus, RADAR system can provide useful information about the current speed of an object.

As yet another example, for one or more cameras, various processing techniques (e.g., range imaging techniques such as, for example, structure from motion, structured light, stereo triangulation, and/or other techniques) can be performed to identify the location (e.g., in three-dimensional space relative to the one or more cameras) of a number of points that correspond to objects that are depicted in imagery captured by the one or more cameras. Other sensor systems can identify the location of points that correspond to objects as well.

Thus, the one or more sensors 104 can be used to collect sensor data that includes information that describes the location (e.g., in three-dimensional space relative to the autonomous vehicle 102) of points that correspond to objects within the surrounding environment of the autonomous vehicle 102.

In addition to the sensor data, the perception system 110 can retrieve or otherwise obtain map data 118 that provides detailed information about the surrounding environment of the autonomous vehicle 102. The map data 118 can provide information regarding: the identity and location of different travelways (e.g., roadways), road segments, buildings, or other items or objects (e.g., lampposts, crosswalks, curbing, etc.); the location and directions of traffic lanes (e.g., the location and direction of a parking lane, a turning lane, a bicycle lane, or other lanes within a particular roadway or other travelway); traffic control data (e.g., the location and instructions of signage, traffic lights, or other traffic control devices); and/or any other map data that provides information that assists the vehicle computing system 106 in comprehending and perceiving its surrounding environment and its relationship thereto.

The perception system 110 can identify one or more objects that are proximate to the autonomous vehicle 102 based on sensor data received from the one or more sensors 104 and/or the map data 118. In particular, in some implementations, the perception system 110 can determine, for each object, state data that describes a current state of such object. As examples, the state data for each object can describe an estimate of the object's: current location (also referred to as position); current speed; current heading (also referred to together as velocity); current acceleration; current orientation; size/footprint (e.g., as represented by a bounding shape such as a bounding polygon or polyhedron); class (e.g., vehicle versus pedestrian versus bicycle versus other); yaw rate; and/or other state information.

In some implementations, the perception system 110 can determine state data for each object over a number of iterations. In particular, the perception system 110 can update the state data for each object at each iteration. Thus, the perception system 110 can detect and track objects (e.g., vehicles, pedestrians, bicycles, and the like) that are proximate to the autonomous vehicle 102 over time.

The prediction system 112 can receive the state data from the perception system 110 and predict one or more future locations for each object based on such state data. For example, the prediction system 112 can predict where each object will be located within the next 5 seconds, 10 seconds, 20 seconds, etc. As one example, an object can be predicted to adhere to its current trajectory according to its current speed. As another example, other, more sophisticated prediction techniques or modeling can be used.

The motion planning system 114 can determine a motion plan for the autonomous vehicle 102 based at least in part on the predicted one or more future locations for the object provided by the prediction system 112 and/or the state data for the object provided by the perception system 110. Stated differently, given information about the current locations of objects and/or predicted future locations of proximate objects, the motion planning system 114 can determine a motion plan for the autonomous vehicle 102 that best navigates the autonomous vehicle 102 relative to the objects at such locations.

As one example, in some implementations, the motion planning system 114 can determine a cost function for each of one or more candidate motion plans for the autonomous vehicle 102 based at least in part on the current locations and/or predicted future locations of the objects. For example, the cost function can describe a cost (e.g., over time) of adhering to a particular candidate motion plan. For example, the cost described by a cost function can increase when the autonomous vehicle 102 approaches a possible impact with another object and/or deviates from a preferred pathway (e.g., a preapproved pathway).

Thus, given information about the current locations and/or predicted future locations of objects, the motion planning system 114 can determine a cost of adhering to a particular candidate pathway. The motion planning system 114 can select or determine a motion plan for the autonomous vehicle 102 based at least in part on the cost function(s). For example, the candidate motion plan that minimizes the cost function can be selected or otherwise determined. The motion planning system 114 can provide the selected motion plan to a vehicle controller 116 that controls one or more vehicle controls 108 (e.g., actuators or other devices that control gas flow, acceleration, steering, braking, etc.) to execute the selected motion plan.

Each of the perception system 110, the prediction system 112, the motion planning system 114, and the vehicle controller 116 can include computer logic utilized to provide desired functionality. In some implementations, each of the perception system 110, the prediction system 112, the motion planning system 114, and the vehicle controller 116 can be implemented in hardware, firmware, and/or software controlling a general purpose processor. For example, in some implementations, each of the perception system 110, the prediction system 112, the motion planning system 114, and the vehicle controller 116 includes program files stored on a storage device, loaded into a memory, and executed by one or more processors. In other implementations, each of the perception system 110, the prediction system 112, the motion planning system 114, and the vehicle controller 116 includes one or more sets of computer-executable instructions that are stored in a tangible computer-readable storage medium such as RAM hard disk or optical or magnetic media.

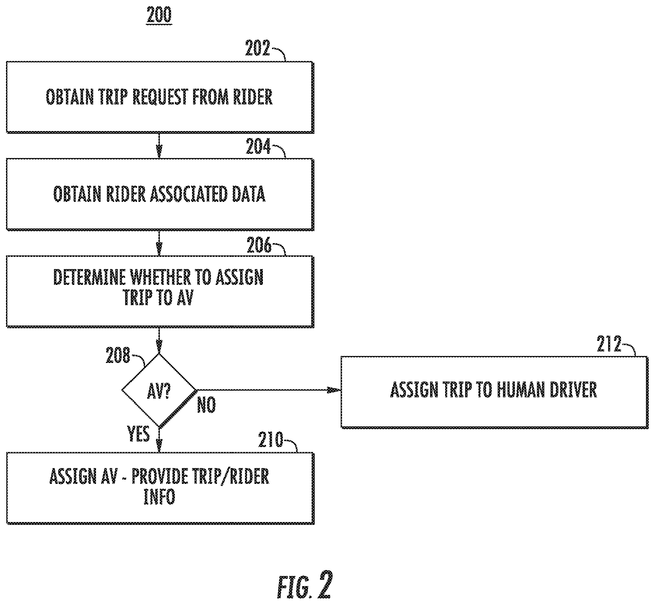

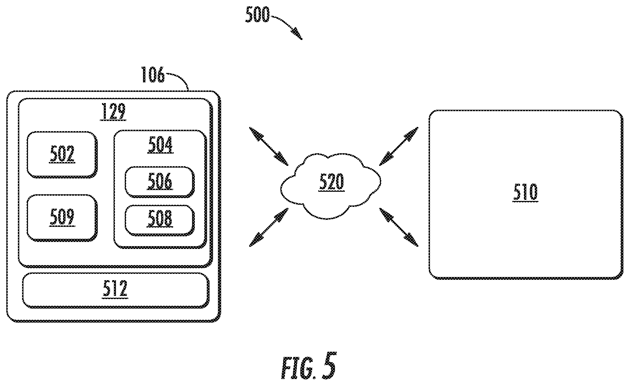

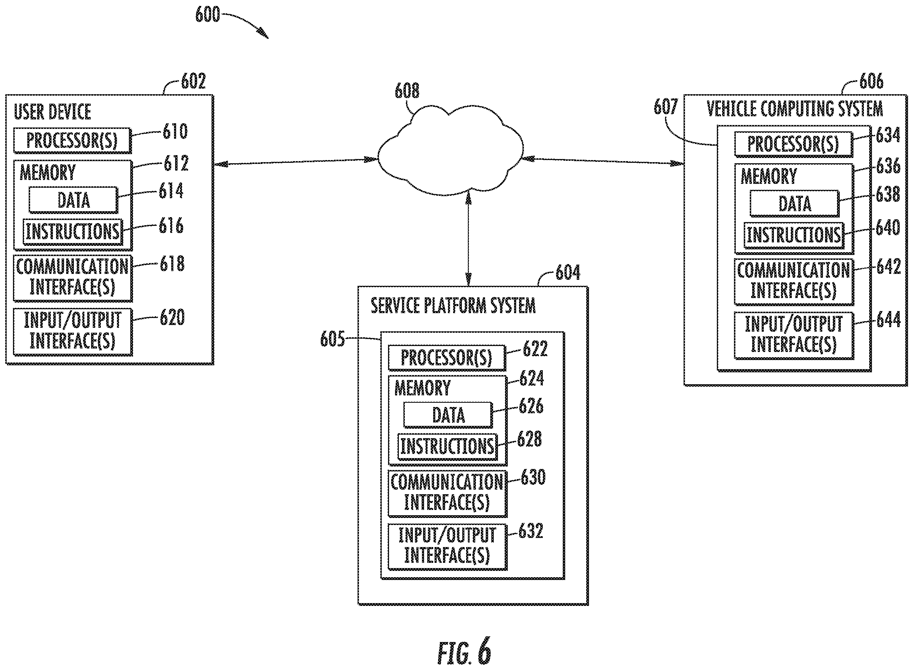

FIG. 2 depicts a flowchart diagram of an example method 200 for determining whether to assign an autonomous vehicle to a service request according to example embodiments of the present disclosure. One or more portion(s) of the operations 200 can be implemented by one or more computing devices such as, for example, the vehicle computing system 106 of Fig. 1, the computing system 106 and/or the remote computing system of FIG. 5, the service platform system 604 of FIG. 6, and/or the like. Moreover, one or more portion(s) of the operations 200 can be implemented as an algorithm on the hardware components of the device(s) described herein (e.g., as in Figs. 1, 5, and 6) to, for example, provide for determining whether an autonomous vehicle can be assigned to perform a service requested by a rider.

At 202, one or more computing devices included within a computing system (e.g., an operations computing system, a service platform system 604, and/or the like) can obtain a vehicle service request (e.g., a trip request) from a rider. For example, a rider may request a vehicle service from a service provider that maintains a fleet of vehicles including both autonomous vehicles and driver operated vehicles. A computing system associated with the service provider can receive the vehicle service request from the rider, for example, through a vehicle service application associated with the service provider which is operating on the rider's user device.

At 204, the computing system can obtain data associated with the rider which can be considered when making a determination of whether an autonomous vehicle or a driver operated vehicle can be assigned to perform the requested vehicle service for the rider. For example, in some implementations, the computing system may obtain one or more indications from a user device associated with the rider that may be relevant to an autonomous vehicle assignment determination. The data associated with the rider may inform a determination of whether the rider would be able to complete the trip if an autonomous vehicle is assigned to perform the requested service.

For example, in some implementations, the computing system can obtain indications from the rider's user device regarding parameters or settings associated with the user device that may be relevant to determining whether an autonomous vehicle can be assigned to perform the requested service. In some implementations, the computing system may obtain indications including one or more of location, battery level, wireless radio availability (e.g., Bluetooth availability, BLE availability, NFC availability, etc.), wireless radio status (e.g., Bluetooth status, BLE status, NFC status, etc.), and/or the like to be considered in determining a vehicle to be assigned to provide the requested service for the rider. **In** some implementations, additional data associated with the rider may also be obtained from the user device for use in determining a vehicle assignment, such as a rider's calendar (e.g., upcoming events), a rider's social network activity, and/or the like.

As another example, in some implementations, the computing system may additionally or alternatively access a user profile associated with the rider that is maintained by the service provider and obtain one or more profile attributes and/or settings that may be relevant to determining whether an autonomous vehicle can be assigned to provide a requested service for the rider.

At 206, the computing system can determine whether an autonomous vehicle can be assigned to perform the vehicle service request based at least in part on the data associated with the rider. For example, in some implementations, the computing system can compare the data associated with the rider, such as one or more indications from the rider's user device regarding parameters or settings associated with the user device, to one or more requirements or thresholds that should be met to allow for assigning an autonomous vehicle to perform the vehicle service request for the rider.

As an example, in some implementations, a service provider application operating on the rider's user device may provide functionality, such as user authentication, vehicle unlocking commands, and/or the like, which requires that the rider's user device be active to initiate the vehicle service at the autonomous vehicle. Thus, the computing system can obtain an indication of the remaining battery level from the rider's user device to determine that the user device is likely to be operating when an autonomous vehicle is scheduled to arrive to initiate the requested service (e.g., there is sufficient remaining battery life that the user device will not power down before the autonomous vehicle arrives to pick up the rider and begin the service). In some implementations, the computing system can compare the indication of remaining battery level from the rider's user device to a battery threshold to determine if the battery level is at or above the threshold, and should therefore allow the user device to remain active, as part of determining whether an autonomous vehicle can be assigned to perform the requested service.

In some implementations, the battery threshold can be determined based on factors associated with the requested service and the availability of an autonomous vehicle. For example, a battery threshold can be selected such that the user device will be active for at least a certain period of time after the autonomous vehicle is scheduled to arrive to begin the requested service, such that the user device is certain to be active at least for the rider pick up and initiation of the requested service. In such situations, the battery threshold can be determined based on consideration of the time to entry for the rider (e.g., the time frame for the autonomous vehicle to arrive and for the rider to enter the vehicle and begin the service). As another example, a battery threshold can be selected such that the user device will be active during the entire life cycle of the requested service (e.g., the user's device is certain to be active for the duration of the service from pick up through drop off), for example, to ensure that the rider's user device is active throughout the service to allow for interactions between the rider and the autonomous vehicle. In such situations, the battery threshold can be determined based on consideration of the time to entry for the autonomous vehicle as well as the expected duration of the vehicle service (e.g., considering factors such as route, traffic, and/or the like).

In some implementations, the service provider application operating on the rider's user device may use a wireless radio (e.g., Bluetooth, BLE, NFC, etc.) capability to provide interaction between the service provider application and the autonomous vehicle, for example, to improve a user experience. In such implementations, the computing system may obtain indications of whether the rider's user device has a desired wireless radio (e.g., Bluetooth, BLE, NFC, etc.) capability and/or whether the user device wireless radio (e.g., Bluetooth, BLE, NFC, etc.) service is currently active and take these factors into consideration in determining whether to assign an autonomous vehicle for the requested service.

At 208, if it is determined that an autonomous vehicle can be assigned to provide the requested service to the rider, operation continues to 210. If, at 208, it is determined that an autonomous vehicle cannot be assigned to provide the requested service to the rider, operation moves to 212.

At 210, in response to determining that an autonomous vehicle can be assigned to perform the requested service, the computing system can assign an autonomous vehicle to the service request and provide associated request/rider data to the assigned autonomous vehicle.

At 212, in response to determining that an autonomous vehicle cannot be assigned to perform the requested service, the computing system can provide the service request to be accessed by a human driver.

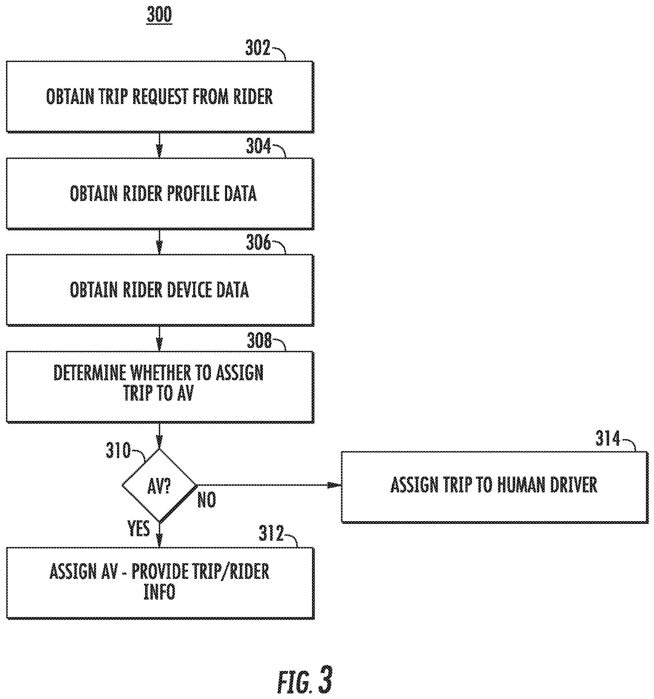

FIG. 3 depicts a flowchart diagram of an example method 300 for determining whether to assign an autonomous vehicle to a service request according to example embodiments of the present disclosure. One or more portion(s) of the operations 300 can be implemented by one or more computing devices such as, for example, the vehicle computing system 106 of Fig. 1, the computing system 106 and/or the remote computing system of FIG. 5, the service platform system 604 of FIG. 6, and/or the like. Moreover, one or more portion(s) of the operations 300 can be implemented as an algorithm on the hardware components of the device(s) described herein (e.g., as in Figs. 1, 5, and 6) to, for example, provide for determining whether an autonomous vehicle can be assigned to perform a service requested by a rider.

At 302, one or more computing devices included within a computing system (e.g., an operations computing system, a service platform system 604, and/or the like) can obtain a vehicle service request (e.g., a trip request) from a rider. For example, a rider may request a vehicle service from a service provider that maintains a fleet of vehicles including both autonomous vehicles and driver operated vehicles. A computing system associated with the service provider can receive the vehicle service request from the rider, for example, through a vehicle service application associated with the service provider which is operating on the rider's user device.

At 304, the computing system can obtain data maintained in a rider profile (e.g., user profile) associated with the rider which can be considered when making a determination of whether an autonomous vehicle or a driver operated vehicle can be assigned to perform the requested vehicle service for the rider. For example, the computing system can access a rider profile associated with the rider that is maintained by the service provider and obtain one or more profile attributes and/or settings from the rider profile that may be relevant to an autonomous vehicle assignment determination. For example, a rider profile may include data regarding the rider's comfort/experience level in using autonomous vehicles (e.g., first time or novice rider, experienced rider, rider who does not want autonomous vehicle service, etc.), the type of vehicle a rider generally requests (e.g., wheelchair accessible, extra storage space, class of vehicle, etc.), use of carpool services, and/or the like. By taking rider profile data into consideration as part of the vehicle assignment determination, the computing system can ensure that an appropriate vehicle is assigned to provide the requested service.

In some implementations, for example, the computing system may determine that a rider generally desires a vehicle that has wheelchair accessibility based on stored rider profile settings/attributes. The computing system can then take vehicle wheelchair accessibility into consideration when determining a vehicle to be assigned to provide the requested service. In some implementations, the rider profile attributes and/or settings can provide default data for use in a vehicle assignment determination. However, the rider profile settings can also be overridden based on a specific service request from the rider. For example, the rider profile data can indicate that the rider is generally willing to move to a designated pickup location to access the vehicle service, but the rider can also indicate in a request that this selection should be modified for the current request (e.g., the rider has packages and does not wish to carry them to a designated pickup location), thereby affecting the determination of a vehicle to be assigned for the requested service.

As another example, in some implementations, the computing system may determine based on rider profile data that the rider is a first-time rider in an autonomous vehicle (or has little experience with autonomous vehicles) and can take this into consideration when determining a vehicle to assign to provide the requested service. Thus, the computing system may consider this factor in the determination and, for example, assign a more rider-friendly vehicle to provide the requested service (e.g., an autonomous vehicle with a tablet or screen to provide more interaction with the rider).

As another example, in some implementations, the computing system may determine based on rider profile data that the rider is well experienced with autonomous vehicles and can take this into consideration when determining a vehicle to assign to provide the requested service. Thus, the computing system may consider this factor in the determination and, for example, assign a new or different vehicle to provide the requested service for the rider (e.g., to allow the rider to experience different vehicles within a fleet).

As another example, in some implementations, the rider profile may indicate that the rider is not comfortable with autonomous vehicles, and the computing system can take this into consideration and, for example, determine that an autonomous vehicle should not be assigned to provide the requested service, if possible.

At 306, the computing system can obtain data associated with the rider's user device which can be considered when making a determination of whether an autonomous vehicle or a driver operated vehicle can be assigned to perform the requested vehicle service for the rider. For example, the computing system may obtain one or more indications from a user device associated with the rider that may be relevant to an autonomous vehicle assignment determination. The data associated with the rider may inform a determination of whether the rider would be able to complete the trip if an autonomous vehicle is assigned to perform the requested service.

For example, in some implementations, the computing system can obtain indications from the rider's user device regarding parameters or settings associated with the user device that may be relevant to determining whether an autonomous vehicle can be assigned to perform the requested service, as discussed above in regard to FIG. 2. For example, in some implementations, the computing system may obtain indications including one or more of location, battery level, wireless radio availability (e.g., Bluetooth availability, BLE availability, NFC availability, etc.), wireless radio status (e.g., Bluetooth status, BLE status, NFC status, etc.), and/or the like to be considered in determining a vehicle to be assigned to provide the requested service for the rider. In some implementations, additional data associated with the rider may also be obtained from the user device for use in determining a vehicle assignment, such as a rider's calendar (e.g., upcoming events), a rider's social network activity, and/or the like.

At 308, the computing system can determine whether an autonomous vehicle can be assigned to perform the vehicle service request based at least in part on the rider profile data and the rider's user device data. For example, in some implementations, the computing system can compare the data associated with the rider, such as one or more rider profile settings and/or preferences and one or more indications from the rider's user device regarding parameters or settings associated with the user device to determine if an autonomous vehicle can be assigned to perform the vehicle service request for the rider.

At 310, if it is determined that an autonomous vehicle can be assigned to provide the requested service to the rider, operation continues to 312. If, at 310, it is determined that an autonomous vehicle cannot be assigned to provide the requested service to the rider, operation moves to 314.

At 312, in response to determining that an autonomous vehicle can be assigned to perform the requested service, the computing system can assign an autonomous vehicle to the service request and provide associated request/rider data to the assigned autonomous vehicle.

At 314, in response to determining that an autonomous vehicle cannot be assigned to perform the requested service, the computing system can provide the service request to be accessed by a human driver.

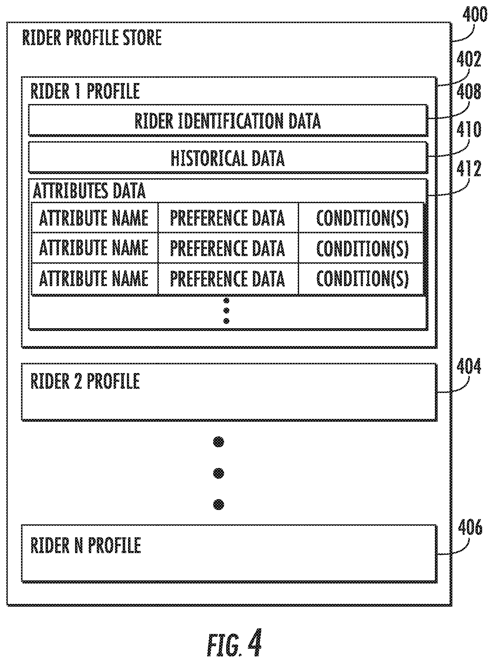

FIG. 4 depicts an example of a rider profile (e.g., user profile) data structure 400 according to example embodiments of the present disclosure. In particular, in some implementations, an operations computing system (e.g., a computing system of an entity associated with an autonomous vehicle) can generate a rider profile associated with a particular user. For example, information that can be used in generating and/or maintaining a rider profile may be collected from one or more application platforms, such as a ride sharing application platform, from one or more vehicle computing systems, or directly from a user (for example, through an application user interface presented on a user device). For example, the user may provide user input into a user device to provide information to be stored within a rider profile. A user profile may be generated for a user and the rider profile may be associated with, or alternatively be a part of, the user account for an application platform, such as a ride sharing application platform, for example. Additionally, in some embodiments, the application platform may be associated with an entity associated with the autonomous vehicle (e.g., the owner of the autonomous vehicle, the managing entity of a fleet including the autonomous vehicle, etc.).

More particularly, FIG. 4 illustrates an example rider profile data store 400 that may be used to store preferences/attributes for multiple users that are related to services associated with an application platform, such as a ride sharing service. In some embodiments, a user/rider profile may be generated for a user after the user has established a user account on an application platform and the rider profile data store 400 can be used to store and organize the users' data, in some embodiments.

As illustrated in FIG. 4, the rider profile data store 400 can include one or more rider profiles (e.g., rider profiles 402, 404, and 406) for users of an application platform, such as a ride sharing platform. A rider profile 402, 404, 406 can include various data associated with the user and with the user's use of services provided by the application platform. For example, in some embodiments, the rider profile 402 can include user/rider identification data 408 to uniquely identify a user within the application platform. As one example, the user identification data may be associated with the user's account on the application platform and can be securely stored. Rider profiles 404 and 406 can include the same structure and type of data as rider profile 402 and as such will not be described in detail for the sake of brevity.

Additionally, the rider profile 402 can include various historical data 410 associated with the user's use of the services provided by the application platform and autonomous vehicles, such as prior request and/or trip histories, for example. The rider profile 402 can include data for a number of attributes 412 that identify the user preferences for selections, settings, and behavior/operation of an autonomous vehicle providing services to the user. As an example, the rider profile 402 can include a data structure including the names, types, and/or categories of each user preference/attribute stored for a user, the setting indications for each user preference/attribute, and, in some instances, one or more conditions associated with a user preference/attribute.

In particular, for each user preference/attribute stored for a user, the rider profile 402 can include one or more indications of a user's preference setting. For example, rider profiles may include preferences or attributes for one or more of vehicle settings, driving, driving characteristics, autonomous vehicle experience level, route preferences, stops, driving modes, preferred vehicle type, vehicle accessibility requirements, and/or the like.

Additionally, in some embodiments, the rider profile 402 can include one or more conditions associated with one or more of the user preferences/attributes. For example, in some embodiments, rider profile 402 may include day and time of day information associated with one or more user preferences/attributes, such as preferences associated with a work commute versus social trips, weekday preferences versus weekend preferences, etc. As another example, the rider profile 402 may also include seasonal information/conditions associated with one or more user preferences/attributes, such as vehicle environment preferences during winter versus vehicle environment preferences during summer and the like.

In some embodiments, an computing system associated with a service provider can access a rider profile associated with the rider requesting a vehicle service that is maintained in rider profile data store 400 and obtain one or more profile attributes or settings 412 that may be relevant to determining whether an autonomous vehicle can be assigned to provide the requested service for the rider. For example, a rider profile may include data regarding the rider's comfort/experience level in using autonomous vehicles (e.g., first time or novice rider, experienced rider, rider who does not want autonomous vehicle service, etc.), the type of vehicle a rider generally requests (e.g., wheelchair accessible, extra storage space, etc.), whether a rider utilizes carpool services, and/or the like. By taking rider profile data into consideration as part of the vehicle determinations, the computing system can ensure that an appropriate vehicle is assigned to provide the requested service.

In some implementations, the profile attributes or settings 412 can provide default data for use in a vehicle assignment determination, however, such default profile settings can be overridden based on a specific service request by the rider. For example, the profile data can indicate that the rider is generally willing to move to a designated pickup location to access the vehicle service, but the rider can also indicate in a request that this selection should be modified for the current request (e.g., the rider has packages and does not wish to carry them to a designated pickup location), thereby affecting the determination of a vehicle to be assigned for the requested service.

As another example, in some implementations, the computing system may determine based on profile data that the rider is a first-time rider in an autonomous vehicle (or has little experience with autonomous vehicles) and can take this into consideration when determining a vehicle to assign to provide the requested service. Thus, the computing system may consider this factor in the determination and, for example, assign a more rider-friendly vehicle to provide the requested service (e.g., an autonomous vehicle with a tablet or screen to provide more interaction with the rider).

As another example, in some implementations, the computing system may determine based on profile data that the rider is well experienced with autonomous vehicles and may take this into consideration when determining a vehicle to assign to provide the requested service. Thus, the operations computing system may consider this factor in the determination and, for example, assign a new or different vehicle to provide the requested service for the rider (e.g., to allow the rider to experience different vehicles within a fleet).

FIG. 5 depicts a block diagram of an example computing system 500 according to example embodiments of the present disclosure. The example computing system 500 illustrated in FIG. 5 is provided as an example only. The components, systems, connections, and/or other aspects illustrated in FIG. 5 are optional and are provided as examples of what is possible, but not required, to implement the present disclosure. The example computing system 500 can include the vehicle computing system 106 of the autonomous vehicle 102 and, in some implementations, a remote computing system 510 including remote computing device(s) that is remote from the autonomous vehicle 102 (e.g., an operations computing system) that can be communicatively coupled to one another over one or more networks 520. The remote computing system 510 can be associated with a central operations system and/or an entity associated with the autonomous vehicle 102 such as, for example, a vehicle owner, vehicle manager, fleet operator, service provider, etc.

The computing device(s) 129 of the vehicle computing system 106 can include processor(s) 502 and a memory 504. The one or more processors 502 can be any suitable processing device (e.g., a processor core, a microprocessor, an ASIC, a FPGA, a controller, a microcontroller, etc.) and can be one processor or a plurality of processors that are operatively connected. The memory 504 can include one or more non-transitory computer-readable storage media, such as RAM, ROM, EEPROM, EPROM, one or more memory devices, flash memory devices, etc., and combinations thereof.

The memory 504 can store information that can be accessed by the one or more processors 502. For instance, the memory 504 (e.g., one or more non-transitory computer-readable storage mediums, memory devices) on-board the autonomous vehicle 102 can include computer-readable instructions 506 can be executed by the one or more processors 502. The instructions 506 can be software written in any suitable programming language or can be implemented in hardware. Additionally, or alternatively, the instructions 506 can be executed in logically and/or virtually separate threads on processor(s) 502.

For example, the memory 504 on-board the autonomous vehicle 102 can store instructions 506 that when executed by the one or more processors 502 on-board the autonomous vehicle 102 cause the one or more processors 502 (the vehicle computing system 106) to perform operations such as any of the operations and functions of the computing device(s) 129 or for which the computing device(s) 129 are configured, as described herein including, for example, operations of FIG. 2 and/or FIG. 3.

The memory 504 can store data 508 that can be obtained, received, accessed, written, manipulated, created, and/or stored. The data 508 can include, for instance, sensor data, map data, data identifying detected objects including current object states and predicted object locations and/or trajectories, service request data (e.g., trip and/or user data), motion plans, etc., as described herein. **In** some implementations, the computing device(s) 129 can obtain data from one or more memory device(s) that are remote from the autonomous vehicle 102.

The computing device(s) 129 can also include one or more communication interfaces 509 used to communicate with one or more other system(s) on-board the autonomous vehicle 102 and/or a remote computing device that is remote from the autonomous vehicle 102 (e.g., of remote computing system 510). The communication interface 509 can include any circuits, components, software, etc. for communicating with one or more networks (e.g., 520). In some implementations, the communication interface 509 can include for example, one or more of a communications controller, receiver, transceiver, transmitter, port, conductors, software, and/or hardware for communicating data.

In some implementations, the vehicle computing system 106 can further include a positioning system 512. The positioning system 512 can determine a current position of the autonomous vehicle 102. The positioning system 512 can be any device or circuitry for analyzing the position of the autonomous vehicle 102. For example, the positioning system 512 can determine position by using one or more of inertial sensors, a satellite positioning system, based on IP address, by using triangulation and/or proximity to network access points or other network components (e.g., cellular towers, WiFi access points, etc.) and/or other suitable techniques. The position of the autonomous vehicle 102 can be used by various systems of the vehicle computing system 106.

The network(s) 520 can be any type of network or combination of networks that allows for communication between devices. In some embodiments, the network(s) can include one or more of a local area network, wide area network, the Internet, secure network, cellular network, mesh network, peer-to-peer communication link, and/or some combination thereof, and can include any number of wired or wireless links. Communication over the network(s) 520 can be accomplished, for instance, via a communication interface using any type of protocol, protection scheme, encoding, format, packaging, etc.

The remote computing system 510 can include one or more remote computing devices that are remote from the vehicle computing system 106. The remote computing devices can include components (e.g., processor(s), memory, instructions, data, etc.) similar to that described herein for the computing device(s) 129. Moreover, the remote computing system 510 can be configured to perform one or more operations of an operations computing system, as described herein including, for example, operations of FIG. 2 and/or FIG. 3.

FIG. 6 depicts a block diagram of an example system 600 according to example embodiments of the present disclosure. The example system 600 illustrated in FIG. 6 is provided as an example only. The components, systems, connections, and/or other aspects illustrated in FIG. 6 are optional and are provided as examples of what is possible, but not required, to implement the present disclosure. FIG. 6 illustrates an example system 600 including a service platform system 604, vehicle computing system(s) 606, and user device(s) 602 that can be communicatively coupled to one another over one or more network(s) 608 and can provide one or more operations in accordance with example embodiments of the systems and methods of the present disclosure.

As illustrated, a user device 602 may provide a user with access to an application platform, such as a ride sharing platform, maintained by a service provider and allow the user to establish/maintain a user account for the application platform, request services associated with the application platform, and/or establish/maintain a rider profile including preferences for the provided services. The user device 602 can be any type of computing device, such as, for example, a personal computing device (e.g., laptop, desktop, etc.), a mobile computing device (e.g., smartphone, tablet, etc.), a gaming console or controller, a wearable computing device, an embedded computing device, a personal assistant computing device, or any other type of computing device.

More particularly, the user device 602 can include one or more processor(s) 610 and at least one memory 612. The one or more processors 610 can be any suitable processing device (e.g., a processor core, a microprocessor, an ASIC, a FPGA, a controller, a microcontroller, etc.) and can be one processor or a plurality of processors that are operatively connected. The memory 612 can include one or more non-transitory computer-readable storage mediums, such as RAM, ROM, EEPROM, EPROM, flash memory devices, magnetic disks, etc., and combinations thereof. The memory 612 can store data 614 and computer-readable instructions 616 which are executed by the processor 610 to cause the user device 602 to perform operations, such as those described herein. The instructions 616 can be software written in any suitable programming language or can be implemented in hardware. Additionally, or alternatively, the instructions 616 can be executed in logically and/or virtually separate threads on processor(s) 610.

In some implementations, the one or more processors 610 and at least one memory 612 may be comprised in one or more computing devices within the user device 602. In some implementations, the user device 602 can obtain data from one or more memory device(s) that are remote from the user device 602.

The user device 602 can also include one or more input/output interface(s) 620 that can be used to receive input, such as from a user, and provide output, such as for display and/or playback to a user. The input/output interface(s) 620 can include, for example, devices for receiving information from or providing information to a user, such as a display device, touch screen, touch pad, mouse, data entry keys, an audio output device such as one or more speakers, a microphone, haptic feedback device, etc. The input/output interface(s) 620 can be used, for example, by a user to control operation of the user device 602.

The user device 602 can also include one or more communication interface(s) 618 used to communicate with one or more systems or devices, including systems or devices that are remotely located from the user device 602, such as service platform system 604 and/or the like, for example. The communication interface(s) 618 can include any circuits, components, software, etc. for communicating with one or more networks (e.g., network 608). In some implementations, the communication interface(s) 618 can include, for example, one or more of a communications controller, receiver, transceiver, transmitter, port, conductors, software, and/or hardware for communicating data.

The network(s) 608 can be any type of network or combination of networks that allows for communication between devices. In some embodiments, the network(s) can include one or more of a local area network, wide area network, the Internet, secure network, cellular network, mesh network, peer-to-peer communication link, and/or some combination thereof, and can include any number of wired or wireless links. Communication over the network(s) 608 can be accomplished, for instance, via a communication interface using any type of protocol, protection scheme, encoding, format, packaging, etc.

As further illustrated, the system 600 can include a service platform system 604 which can provide services for an application platform, for example, maintained by a service provider, such as a ride sharing platform. For example, the service platform system 604 can communicate with one or more user devices 602 to provide user access to an application platform. The service platform system 604 can also communicate with one or more vehicle computing systems 606 to provision services associated with an application platform, such as a ride sharing platform, delivery service platform, courier service platform, and/or other service platform. The service platform system 604 can be associated with a central operations system and/or an entity associated with an autonomous vehicle and/or application platform such as, for example, a vehicle owner, vehicle manager, fleet operator, service provider, etc.

More particularly, the service platform system 604 can include one or more computing device(s) 605 to perform operations associated with an application platform. The computing device(s) 605 can include one or more processor(s) 622 and at least one memory 624. The one or more processors 622 can be any suitable processing device (e.g., a processor core, a microprocessor, an ASIC, a FPGA, a controller, a microcontroller, etc.) and can be one processor or a plurality of processors that are operatively connected. The memory 624 can include one or more non-transitory computer-readable storage mediums, such as RAM, ROM, EEPROM, EPROM, flash memory devices, magnetic disks, etc., and combinations thereof.

The memory 624 can store data 626 and computer-readable instructions 628 which are executed by the processor 622 to cause the computing device(s) 605 to perform operations such as those described herein. The instructions 628 can be software written in any suitable programming language or can be implemented in hardware. Additionally, or alternatively, the instructions 628 can be executed in logically and/or virtually separate threads on processor(s) 622. For example, the memory 624 can store instructions 628 that when executed by the one or more processors 622 cause the one or more processors 622 to perform any of the operations and/or functions described herein, including, for example, one or more operations of FIG. 2 and/or FIG. 3. Additionally, in some implementations, the memory 624 can store data 626 which can include data such as described herein and the service platform system 604 can provide at least some portion of the data to one or more remote computing systems, such as a vehicle computing system in an autonomous vehicle (e.g., vehicle computing system 106 of FIG. 1) and/or user device 602, for example.

**In** some implementations, the one or more processors 622 and at least one memory 624 may be comprised in one or more computing devices within the service platform system 604. **In** some implementations, the service platform system 604 can obtain data from one or more memory device(s) that are remote from the service platform system 604.

The one or more computing device(s) 605 included in service platform system 604 can also include one or more input/output interface(s) 632 that can be used to receive input, such as from a user, and provide output, such as for display or playback to a user. The input/output interface(s) 632 can include, for example, devices for receiving information from or providing information to a user, such as a display device, touch screen, touch pad, mouse, data entry keys, an audio output device such as one or more speakers, a microphone, haptic feedback device, etc. The input/output interface(s) 632 can be used, for example, by a user to control operation of the computing device(s) 605 included in service platform system 604.

The computing device(s) 605 can also include one or more communication interface(s) 630 used to communicate with one or more systems or devices, including systems or devices that are remotely located from the computing device(s) 605, such as a user device 602, a vehicle computing system 606, and/or the like, for example. The communication interface(s) 630 can include any circuits, components, software, etc. for communicating with one or more networks (e.g., network 608). In some implementations, the communication interface(s) 630 can include, for example, one or more of a communications controller, receiver, transceiver, transmitter, port, conductors, software, and/or hardware for communicating data.

In some implementations, the service platform system 604 can include one or more server computing devices. If the service platform system 604 includes multiple server computing devices, such server computing devices can operate according to various computing architectures, including, for example, sequential computing architectures, parallel computing architectures, or some combination thereof.

As further illustrated, the system 600 can include a vehicle computing system 606 (e.g., included in an autonomous vehicle such as autonomous vehicle 102 of FIG. 1) can provide operations for controlling an autonomous vehicle. In some implementations, the vehicle computing system 606 can perform autonomous vehicle motion planning and enable operation of an autonomous vehicle, as described herein.

More particularly, the vehicle computing system 606 can include one or more computing device(s) 607 to perform operations associated with an autonomous vehicle. The computing device(s) 607 can include one or more processor(s) 634 and at least one memory 636. The one or more processor(s) 634 can be any suitable processing device (e.g., a processor core, a microprocessor, an ASIC, a FPGA, a controller, a microcontroller, etc.) and can be one processor or a plurality of processors that are operatively connected. The memory 636 can include one or more non-transitory computer-readable storage mediums, such as RAM, ROM, EEPROM, EPROM, flash memory devices, magnetic disks, etc., and combinations thereof.

The memory 636 can store data 638 and computer-readable instructions 640 which are executed by the processor(s) 634 to cause the computing device(s) 607 to perform operations such as described herein, including providing for operation of an autonomous vehicle to provide a requested service to a rider, for example. The instructions 640 can be software written in any suitable programming language or can be implemented in hardware. Additionally, or alternatively, the instructions 640 can be executed in logically and/or virtually separate threads on processor(s) 634. For example, the memory 636 can store instructions 640 that when executed by the one or more processor(s) 634 cause the one or more processor(s) 634 to perform any of the operations and/or functions described herein, including, for example, one or more operations of FIG. 2 and/or FIG. 3.

In some implementations, the one or more processor(s) 634 and at least one memory 636 may be comprised in one or more computing devices within the vehicle computing system 606. In some implementations, the vehicle computing system 606 can obtain data from one or more memory device(s) that are remote from the vehicle computing system 606.

The one or more computing device(s) 607 included in vehicle computing system 606 can also include one or more input/output interface(s) 644 that can be used to receive input, such as from a user, and provide output, such as for display or playback to a user. The input/output interface(s) 644 can include, for example, devices for receiving information from or providing information to a user, such as a display device, touch screen, touch pad, mouse, data entry keys, an audio output device such as one or more speakers, a microphone, haptic feedback device, etc. The input/output interface(s) 644 can be used, for example, by a user to control operation of the computing device(s) 607 included in vehicle computing system 606.

The computing device(s) 607 can also include one or more communication interface(s) 642 used to communicate with one or more systems or devices, including systems and devices on-board an autonomous vehicle as well as systems or devices that are remotely located from the computing device(s) 607 and/or the autonomous vehicle, such as service platform system 604, user device 602, and/or the like, for example. The communication interface(s) 642 can include any circuits, components, software, etc. for communicating with one or more networks (e.g., network 608). In some implementations, the communication interface(s) 642 can include, for example, one or more of a communications controller, receiver, transceiver, transmitter, port, conductors, software, and/or hardware for communicating data.

Computing tasks discussed herein as being performed at computing device(s) remote from the vehicle can instead be performed at the vehicle (e.g., via the vehicle computing system), or vice versa. Such configurations can be implemented without deviating from the scope of the present disclosure. The use of computer-based systems allows for a great variety of possible configurations, combinations, and divisions of tasks and functionality between and among components. Computer-implemented operations can be performed on a single component or across multiple components. Computer-implements tasks and/or operations can be performed sequentially or in parallel. Data and instructions can be stored in a single memory device or across multiple memory devices.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

## Claims

1. A computer-implemented method for assigning an autonomous vehicle to perform a requested service comprising:
obtaining, by a computing system comprising one or more computing devices, a vehicle service request from a rider;
obtaining, by the computing system, data associated with the rider making the vehicle service request, wherein obtaining data associated with the rider making the vehicle service request comprises obtaining one or more indications from a user device associated with the rider, wherein the one or more indications from a user device associated with the rider comprises an indication of a remaining battery level for the user device;
determining, by the computing system, whether an autonomous vehicle can be assigned to perform the vehicle service request based at least in part on the data associated with the rider;
selecting a battery level threshold, based at least in part on a factor associated with the requested service and an availability of the autonomous vehicle, wherein the battery level threshold is selected such that the user device will be active for at least a certain period of time after the autonomous vehicle is scheduled to arrive to begin the requested service;
wherein determining whether the autonomous vehicle can be assigned to perform the vehicle service request comprises determining whether the remaining battery level for the user device is above the selected threshold; and
in response to determining that an autonomous vehicle can be assigned to perform the vehicle service request, providing, by the computing system, trip request data to the autonomous vehicle.

2. The computer-implemented method of claim 1 wherein the one or more indications from a user device associated with the rider comprises one or more indications regarding a wireless radio capability of the user device.

3. The computer-implemented method of any of claims 1 to 2 wherein obtaining data associated with the rider making the vehicle service request comprises obtaining a rider profile associated with the rider making the vehicle service request.

4. The computer-implemented method of claim 3 wherein the rider profile comprises information regarding a type of vehicle that should be assigned to provide the requested service.

5. A computing system comprising:
one or more processors; and
one or more memories including instructions that, when executed by the one or more processors, cause the one or more processors to perform a method according to any one of the preceding claims.

6. One or more tangible, non-transitory computer-readable media storing computer-readable instructions that when executed by one or more processors cause the one or more processors to perform a method according to any one of claims 1 to 5.

## Patentansprüche

1. Computerimplementiertes Verfahren zum Zuweisen eines autonomen Fahrzeugs zur Ausführung eines angeforderten Diensts, umfassend:
Erhalten, durch ein Computersystem, das eine oder mehrere Computervorrichtungen umfasst, einer Fahrzeugdienstanforderung von einem Fahrer;
Erhalten, durch das Computersystem, von Daten, die dem Fahrer zugeordnet sind, der die Fahrzeugdienstanforderung stellt, wobei das Erhalten von Daten, die dem Fahrer zugeordnet sind, der die Fahrzeugdienstanforderung stellt, das Erhalten einer oder mehrerer Anzeigen von einer Benutzervorrichtung umfasst, die dem Fahrer zugeordnet ist, wobei die eine oder mehreren Anzeigen von einer Benutzervorrichtung, die dem Fahrer zugeordnet ist, eine Anzeige des verbleibenden Batteriestands der Benutzervorrichtung umfassen;
Bestimmen, durch das Computersystem, ob ein autonomes Fahrzeug zur Ausführung der Fahrzeugdienstanforderung zugewiesen werden kann, zumindest teilweise auf Grundlage der dem Fahrer zugeordneten Daten;
Auswählen eines Schwellenwerts für den Batteriestand, der zumindest teilweise auf einem Faktor basiert, der dem angeforderten Dienst und der Verfügbarkeit des autonomen Fahrzeugs zugeordnet ist, wobei der Schwellenwert für den Batteriestand so gewählt wird, dass die Benutzervorrichtung mindestens für einen bestimmten Zeitraum aktiv bleibt, nachdem das autonome Fahrzeug planmäßig eintreffen soll, um den angeforderten Dienst zu beginnen;
wobei das Bestimmen, ob dem autonomen Fahrzeug die Ausführung der Fahrzeugdienstanforderung zugewiesen werden kann, das Bestimmen umfasst, ob der verbleibende Batteriestand der Benutzervorrichtung über dem ausgewählten Schwellenwert liegt; und
als Reaktion auf die Bestimmung, dass einem autonomen Fahrzeug die Ausführung der Fahrzeugdienstanforderung zugewiesen werden kann, Bereitstellen, durch das Computersystem, an das autonome Fahrzeug, von Fahrtanforderungsdaten.

2. Computerimplementiertes Verfahren nach Anspruch 1, wobei die eine oder mehrere Anzeigen von einer dem Fahrer zugeordneten Benutzervorrichtung eine oder mehrere Anzeigen bezüglich einer drahtlosen Funkfähigkeit der Benutzervorrichtung umfassen.

3. Computerimplementiertes Verfahren nach einem der Ansprüche 1 oder 2, wobei das Erhalten von Daten, die dem Fahrer zugeordnet sind, der die Fahrzeugdienstanforderung stellt, das Erhalten eines Fahrerprofils umfasst, das dem Fahrer zugeordnet ist, der die Fahrzeugdienstanforderung stellt.

4. Computerimplementiertes Verfahren nach Anspruch 3, wobei das Fahrerprofil Informationen über einen Fahrzeugtyp umfasst, der zur Bereitstellung des angeforderten Diensts zugewiesen werden soll.

5. Computersystem, umfassend:
einen oder mehrere Prozessoren; und
eine oder mehrere Speichervorrichtungen, die Anweisungen einschließen, die, wenn sie von dem einen oder den mehreren Prozessoren ausgeführt werden, den einen oder die mehreren Prozessoren veranlassen, ein Verfahren nach einem der vorstehenden Ansprüche durchzuführen.

6. Ein oder mehrere greifbare, nichtflüchtige, computerlesbare Medien, die computerlesbare Anweisungen speichern, die, wenn sie von einem oder mehreren Prozessoren ausgeführt werden, den einen oder die mehreren Prozessoren veranlassen, das Verfahren nach einem der Ansprüche 1 bis 5 durchzuführen.

## Revendications

1. Procédé mis en œuvre par ordinateur pour affecter un véhicule autonome à réaliser un service demandé, comprenant :
l'obtention, par un système informatique comprenant un ou plusieurs dispositifs informatiques, d'une demande de service de véhicule de la part d'un conducteur ;
l'obtention, par le système informatique, de données associées au conducteur faisant la demande de service de véhicule, dans lequel l'obtention de données associées au conducteur faisant la demande de service de véhicule comprend l'obtention d'une ou de plusieurs indications d'un dispositif utilisateur associé au conducteur, dans lequel les une ou plusieurs indications d'un dispositif utilisateur associé au conducteur comprennent une indication d'un niveau de batterie restant pour le dispositif utilisateur ;
la détermination, par le système informatique, pour savoir si un véhicule autonome peut être affecté à réaliser la demande de service de véhicule sur la base, au moins en partie, des données associées au conducteur ;
la sélection d'un seuil de niveau de batterie, sur la base, au moins en partie, d'un facteur associé au service demandé et à la disponibilité du véhicule autonome, dans lequel le seuil de niveau de batterie est sélectionné de telle sorte que le dispositif utilisateur soit actif pendant au moins une certaine période de temps après que le véhicule autonome est programmé pour arriver à commencer le service demandé ;
dans lequel la détermination pour savoir si le véhicule autonome peut être affecté à réaliser la demande de service de véhicule comprend la détermination pour savoir si le niveau de batterie restant du dispositif utilisateur est au-dessus du seuil sélectionné ; et
à la suite de la détermination qu'un véhicule autonome peut être affecté à réaliser la demande de service de véhicule, la fourniture, par le système informatique, de données de demande de trajet au véhicule autonome.

2. Procédé mis en œuvre par ordinateur selon la revendication 1, dans lequel les une ou plusieurs indications provenant d'un dispositif utilisateur associé au conducteur comprennent une ou plusieurs indications concernant une capacité radio sans fil du dispositif utilisateur.

3. Procédé mis en œuvre par ordinateur selon l'une quelconque des revendications 1 à 2, dans lequel l'obtention de données associées au conducteur faisant la demande de service de véhicule comprend l'obtention d'un profil de conducteur associé au conducteur faisant la demande de service de véhicule.

4. Procédé mis en œuvre par ordinateur selon la revendication 3, dans lequel le profil de conducteur comprend des informations concernant un type de véhicule qui doit être affecté à fournir le service demandé.

5. Système informatique, comprenant :
un ou plusieurs processeurs ; et
une ou plusieurs mémoires incluant des instructions qui, lorsqu'elles sont exécutées par les un ou plusieurs processeurs, amènent les un ou plusieurs processeurs à réaliser un procédé selon l'une quelconque des revendications précédentes.

6. Un ou plusieurs supports tangibles non transitoires lisibles par ordinateur stockant des instructions lisibles par ordinateur qui, lorsqu'elles sont exécutées par un ou plusieurs processeurs, amènent les un ou plusieurs processeurs à réaliser un procédé selon l'une quelconque des revendications 1 à 5.
